# EUROPEAN PATENT SPECIFICATION

(11) **EP 3 703 225 B1**
(45) Date of publication and mention of the grant of the patent: **12.04.2023**
(21) Application number: 20159229.2
(22) Date of filing: 25.02.2020
(51) Int. Cl.: H02K 1/18, H02K 21/22

(54) **STATOR FIXING STRUCTURE OF WINDING ROLLER MOTOR AND TEXTILE MACHINE USING THE MOTOR**
STATORBEFESTIGUNGSSTRUKTUR EINES WICKELROLLENMOTORS UND TEXTILMASCHINE MIT DEM MOTOR
STRUCTURE DE FIXATION DE STATOR DE MOTEUR DE ROULEAU D'ENROULEMENT ET MACHINE TEXTILE UTILISANT LE MOTEUR

(30) Priority: 27.02.2019 CN 201910147378
(43) Date of publication of application: 02.09.2020
(73) Proprietor: Saurer (Jiangsu) Textile Machinery Co. Ltd., 215024 Suzhou Jiangsu Province (CN)
(72) Inventor: Wu, Yunfeng, Suzhou, Jiangsu 215001 (CN)
(74) Representative: Morgenthum-Neurode, Mirko

(56) References cited:
- EP-A2- 1 432 104
- CN-A- 107 346 923
- CN-U- 207 652 221
- CN-U- 207 861 264
- CN-Y- 201 254 382
- JP-U- H0 354 362

## Description

The present invention relates to the field of textile machines, and particularly to an improvement of a winding roller motor for driving a bobbin to rotate, which is comprised of a spinning station of a textile machine.

The existing textile machine, such as a rotor spinning machine, a twisting machine and a vortex spinning machine, usually each comprises a plurality of spinning stations arranged side by side, wherein each station comprises an independent processing unit (e.g., a spinner, a twisting spindle, and the like) for processing yarns, and usually each station finally winds the yarns on an empty paper tube (bobbin) to form a yarn package, while an empty bobbin is generally driven to rotate by a winding roller in contact with the empty bobbin. In the existing textile machine, the winding rollers for driving the bobbins to rotate at a plurality of stations are usually connected and collectively driven by a single shaft. However, during this collective driving, once a yarn breakage or other conditions occur in a station and the spinning is stopped, the winding roller at that station still rotates normally since it is connected to other stations and driven collectively. On the one hand, the energy consumption is increased due to the idling of the winding roller, and on the other hand, since the winding roller still rotates normally, a broken yarn may wind around the driving roller, while the centralized driving is adverse to a separate control of each station and cannot drive and adjust a single spindle.

The published prior art document CN 201254382 Y relates to a low-speed high-torque gearless permanent-magnet synchronous electric roller which fundamentally solves the problems of low transmission efficiency, waste electric energy, and the like which exist in the present electric roller. Basically, the electric roller has a configuration as defined in the preamble portion of claim 1.

The published prior art document CN 207652221 U discloses a winding roller with a built-in brushless motor. The winding roller comprises a shaft with two bearings mounted on the shaft, wherein in radial direction of the bearing, a cap is arranged on the bearing followed by a drum casing.

In view of the prior art, it is necessary to improve the driving of the winding roller of the existing textile machine.

Another objective of the present invention is to provide a textile machine using a winding roller motor to separately drive a yarn bobbin at each station.

In order to achieve the first objective, the present invention provides a winding roller motor according to claim 1.

According to one embodiment of the present invention, the motor stator comprises magnetic steel and a coil wound on the magnetic steel, and the motor stator is fixed, by means of press-fitting, riveting, welding or fasteners, on the stator shaft sleeve disposed to sleeve the fixed shaft.

According to one embodiment of the present invention, the motor stator comprises magnetic steel and a coil wound on the magnetic steel, and the motor stator is fixed on the stator shaft sleeve disposed to sleeve a fixed shaft by means of screws penetrating the magnetic steel.

According to one embodiment of the present invention, the stator shaft sleeve is fixed on the fixed shaft by means of press-fitting, riveting, welding or fasteners.

According to one embodiment of the present invention, knurling is provided on the fixed shaft at a position in press-fitting with the stator shaft sleeve.

According to one embodiment of the present invention, the fixed shaft comprises a cylindrical middle section in a middle thereof, cut-out sections extending from two ends of the middle section and formed by cutting off a part of cylinder, and fixed sections extending from the cut-out section, the motor stator being fixed at the middle section of the fixed shaft.

According to one embodiment of the present invention, the winding roller motor further comprises a motor stator driving circuit board fixed on the fixed shaft and electrically connected to the motor stator.

According to one embodiment of the present invention, the motor stator driving circuit board is an annular circuit board fixed on the stator shaft sleeve.

In order to achieve the second objective, the present invention provides a textile machine, comprising a plurality of spinning stations arranged side by side, each station comprising a bobbin for winding yarns and a winding roller for driving the bobbin to rotate, the bobbin at each spinning station is separately driven by an independent winding roller which uses the winding roller motor mentioned above.

The winding roller of the textile machine of the present invention uses a winding roller motor formed by a drum casing with a built-in motor, and the yarn bobbin at each station is separately driven by this winding roller with a built-in motor, so as to prevent the situation that the yarn bobbins at all of the existing stations are collectively driven and the winding rollers continuously idle when a certain station is failed, and the winding quality at each station can be flexibly controlled. In addition, the built-in motor has its motor stator fixed on the fixed shaft by means of a stator shaft sleeve, which is simple in structure, convenient to be mounted and easy to be maintained.
Fig. 1 is a partial structural diagram of a single station of a textile machine according to a first embodiment of the present invention.
Fig. 2 is a cross-sectional structural diagram of a winding roller motor according to a first embodiment of the present invention.
Fig. 3 is a structural diagram of a fixed shaft of a winding roller motor according to the first embodiment of the present invention.
Fig. 4 is a structural diagram of a motor stator of a winding roller motor according to the first embodiment of the present invention.
Fig. 5 is a structural diagram of an end cap of a winding roller motor according to the first embodiment of the present invention.
Fig. 6 is a structural diagram of a motor rotor of a winding roller motor according to the first embodiment of the present invention.
Fig. 7 is a structural diagram of a speed measuring magnetic ring of a winding roller motor according to the first embodiment of the present invention.
Fig. 8 is a cross-sectional structural diagram of a winding roller motor according to a second embodiment of the present invention.
Fig. 9 is a structural diagram of a rotating part of a speed measuring unit of a winding roller motor according to the second embodiment of the present invention.
Fig. 10 is a cross-sectional structural diagram of a winding roller motor according to a third embodiment of the present invention.
Fig. 11 is a structural diagram of an end cap of a winding roller motor according to a fourth embodiment of the present invention.

The present invention is directed to a textile machine, which uses a winding roller to drive a bobbin to rotate so as to wind yarns onto the bobbin, such as a rotor spinning machine, a twisting machine, an air-jet vortex spinning machine, etc., and the structure of the present invention will be described below using only a rotor spinning machine as an example.

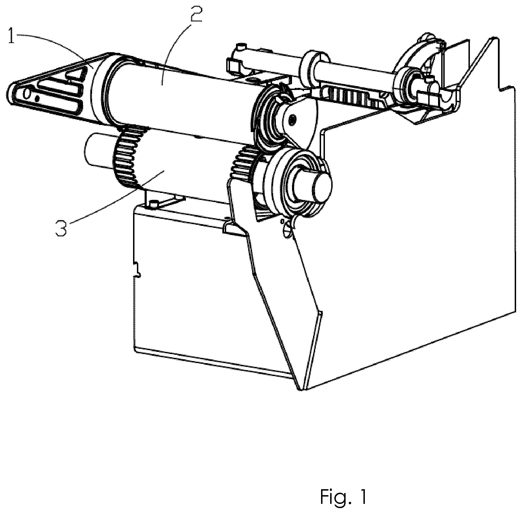

The rotor spinning machine of the present invention comprises a plurality of rows of identical stations arranged side by side, and please refer to Fig. 1, which illustrates only a partial structural diagram of a single station of the rotor spinning machine of the present invention. Each station comprises a cradle 1 for holding a bobbin, a bobbin 2 held between the cradles 1 to wind a yarn, and a winding roller 3 in contact with the bobbin 2 to drive the bobbin to rotate.

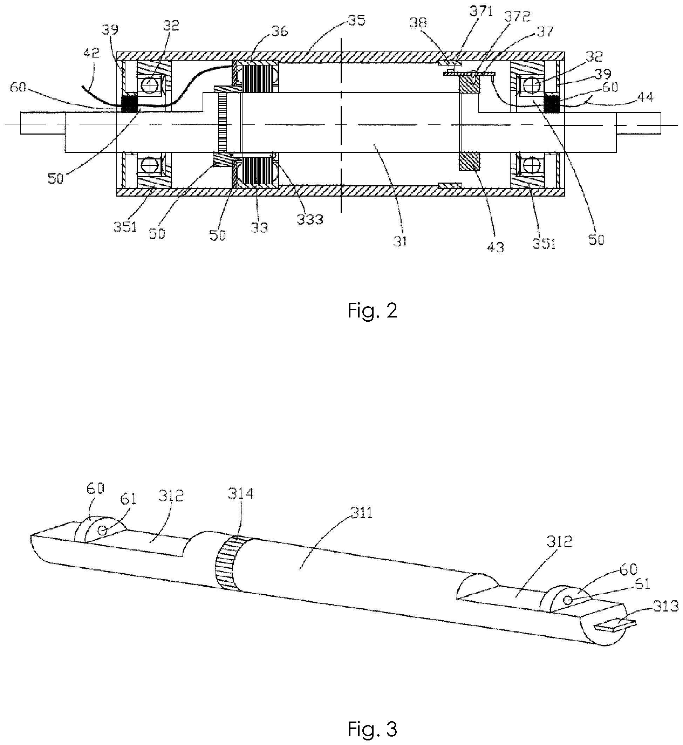

As mentioned above, in the existing rotor spinning machine, the winding rollers of a plurality of stations are driven by one shaft to rotate simultaneously, while in the textile machine of the present invention, the winding roller 3 of each station is a winding roller motor that can be driven separately. Please refer to Fig. 2, which illustrates a cross-sectional structural diagram of a winding roller 3 of a textile machine according to a first embodiment of the present invention. In this embodiment, the winding roller 3 of the present invention mainly comprises a fixed shaft 31, two bearings 32 disposed to sleeve both ends of the fixed shaft 31, a motor stator 33 and a driving circuit board 34 of the motor stator fixed on the fixed shaft, a drum casing 35 mounted outside outer rings of the bearings, a motor rotor 36 mounted on an inner wall of the drum casing 35 and corresponding to the motor stator 33, a speed measuring circuit board 37 fixed on the fixed shaft, a speed measuring magnetic ring 38 mounted on the inner wall of the drum casing 35 and corresponding to the speed measuring circuit board 37, and end caps 39 disposed on the fixed shaft 31 at the outer side of the two bearings 32 to close the drum casing 35.

Please still refer to Fig. 2 and in conjunction with Fig. 3, wherein the fixed shaft 31 comprises a cylindrical middle section 311 with a larger diameter in a middle thereof, cut-out sections 312 extending from the middle section 311 to both sides, with surfaces partially cut off along a longitudinal direction of the fixed shaft, and fixed sections 313 extending from the cut-out sections 312, wherein knurling 314 is provided at the middle section of the fixed shaft close to one end.

Please still refer to Fig. 2, one end of the middle section of the fixed shaft 31 is press-fitted with a stator shaft sleeve 41, which is press-fitted at a position in the middle section 311 of the fixed shaft 31 where the knurling 314 is provided.

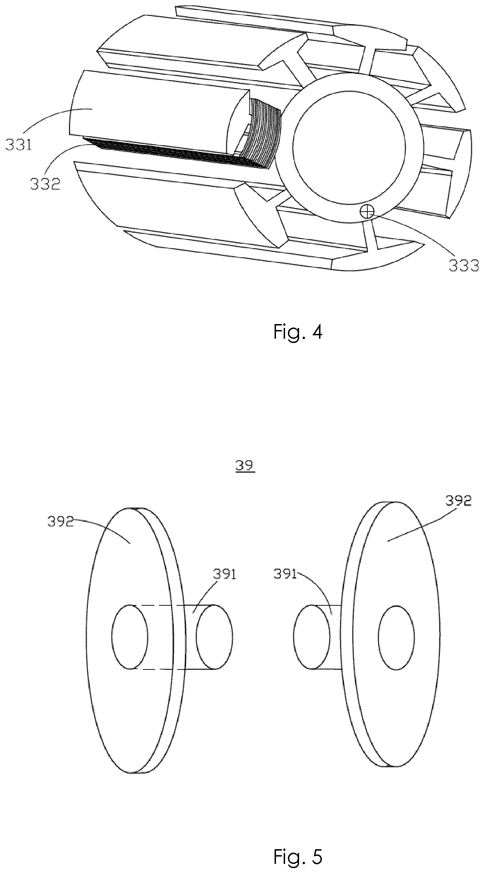

Please refer to Figs. 2 and 4, the motor stator 33 comprises magnetic steel 331 and a stator coil 332 wound on the magnetic steel 331; at least one screw 333 penetrating the magnetic steel 331 in a longitudinal direction is provided on the magnetic steel 331 of the motor stator, and the motor stator 33 is fixed on the stator shaft sleeve 41 by the screw 333.

The stator shaft sleeve 41 is fixed with an annular driving circuit board 34 of the motor stator for controlling the energization of the stator coil 332; one end of the annular driving circuit board 34 of the motor stator is connected to the motor stator coil 332, and the other end is connected to a control unit (not illustrated) outside the motor through a lead 42.

Please still refer to Fig. 2, the other end of the middle section of the fixed shaft 31 is provided with a speed measuring shaft sleeve 43, which is press-fitted and fixed on the fixed shaft 31; an outer surface of the speed measuring shaft sleeve 43 is fixed with a speed measuring circuit board 37 by a screw; and the speed measuring circuit board 37 is provided with a speed measuring element 371 and is connected to a control unit (not illustrated) outside the motor through a lead 44. Since the stator coil of the motor stator generates heat after being energized, the speed measuring unit is disposed at a position far away from the motor stator, so that the speed measuring effect of the speed measuring unit can be prevented from being influenced by the heat generated by the motor stator; and the specific far-away position depends on the power, the heat generation condition of the motor stator, etc., so long as the heat generated by the motor stator does not influence the speed measurement of the speed measuring unit.

Please still refer to Figs. 2 and 3, wherein a diameter of the inner race of the bearing 32 disposed to sleeve the fixed shaft 31 is equivalent to a diameter of the middle section 311 of the fixed shaft 31. Please refer to Fig. 2, the two bearings 32 are disposed to sleeve the cut-out sections 312 of the fixed shaft 31, respectively; since the cut-out section 312 of the fixed shaft 31 is obtained by cutting out a part of a shaft body from the cylindrical middle section 311, a gap 50 is formed between the inner race of the bearing 32 and the cut-out section 312 of the fixed shaft, so that the lead 42 of the driving circuit board 34 of the motor stator and the lead 44 of the speed measuring circuit board 37 can pass through the gap 50 between the bearing 32 and the fixed shaft 31. A bearing seat 351 is fixed between the outer ring of the bearing 32 and the inner wall of the drum casing 35 of the winding roller, and the outer ring of the bearing 32 is connected fixedly to the inner wall of the drum casing 35 through the bearing seat 351.

Please still refer to Figs. 2 and 3, the cut-out section of the fixed shaft 31 is provided with a semi-circular seal 60 which, together with the cut-out section 312 of the fixed shaft 31, just form a cylinder with a diameter equivalent to the diameter of the complete cylinder of the middle section 311 of the fixed shaft 31; the seal 60 may be made of plastics or plastic cement, and the seal 60 is provided with an opening 61 through which a lead can pass.

At both ends of the fixed shaft 31 of the winding roller 3, two end caps 39 are press-fitted at the outer side of the bearing 32; please refer to Figs. 5 and 2, each end cap 39 comprises a shaft sleeve section 391 disposed to sleeve the fixed shaft, and a drum sealing section 392 for sealing the drum casing which extending vertically from an edge of the shaft sleeve section 391; the cross sections of the two end caps 39 are L-shaped, with a diameter of the shaft sleeve section 391 equivalent to the diameter of the middle section 311 of the fixed shaft, i.e., the diameter of the cylinder formed by the seal 60 and the cut-out section 312 of the fixed shaft, and a diameter of the drum sealing section 392 equivalent to a diameter of an inner wall of the drum casing 35.

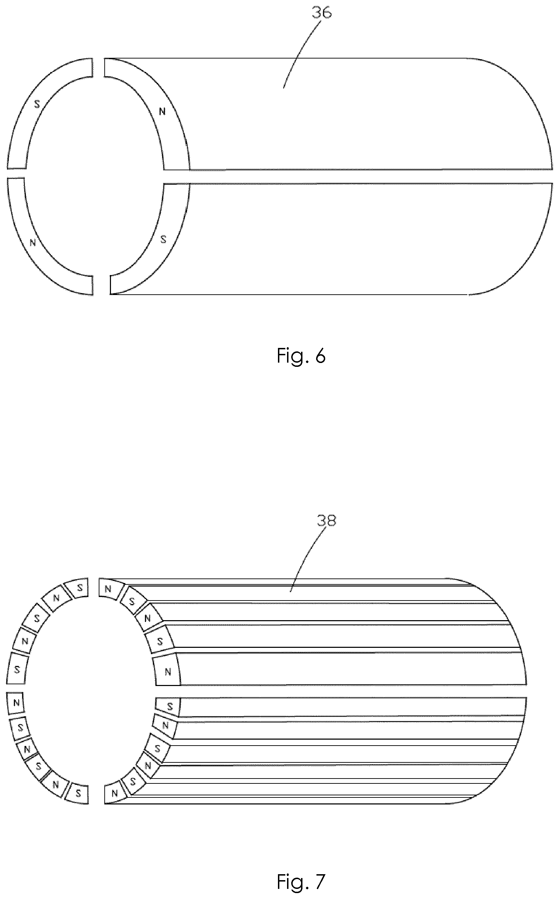

Please refer to Figs. 6 and 2, a motor rotor magnetic ring composed of a circle of N-pole and S-pole magnetic strips made of permanent magnets arranged at intervals is provided on the inner wall of the drum casing 35 of the winding roller at a position corresponding to the stator coil on the fixed shaft 31. A magnetic ring composed of two N-pole magnetic strips and two S-pole magnetic strips is illustrated in this embodiment. In other embodiments, a magnetic ring composed of different numbers of magnetic strips may also be provided according to the specific requirement of the motor. For example, in the previous embodiment, one motor rotor magnetic ring is provided, and in other embodiments, two or more magnetic rings may also be provided to expand more motor components.

Referring to Figs. 7 and 2, a motor speed measuring magnetic ring 38 composed of a circle of N-pole and S-pole magnetic strips made of permanent magnets arranged at intervals is provided on the inner wall of the drum casing 35 of the winding roller at a position corresponding to the speed measuring circuit board 37 on the fixed shaft 31. Since the accuracy requirements for the speed measurement and the driving circuit are different, the number of N-pole and S-pole magnetic strips in the motor speed measuring magnetic ring 38 is greater than the number of N-pole and S-pole magnetic strips in the motor rotor magnetic ring 36. In other embodiments, the number of detection elements of the speed measuring component 38 may be adjusted based on the accuracy.

Please refer to Fig. 2, during the assembly, the motor stator shaft sleeve 41 is mounted at one end of the middle section of the fixed shaft 31 by means of press-fitting, riveting, welding or fasteners. The motor stator 33 is fixed on the stator shaft sleeve 41 by the screws 333. In other embodiments, the motor stator 33 may also be fixed on the stator shaft sleeve 41 by means of press-fitting, riveting, welding or fasteners. The driving circuit board 34 of the motor stator is fixed on the stator shaft sleeve 41 and connected to the motor stator coil 332 electrically with the lead 42. The motor speed measuring shaft sleeve 43 is mounted at the other end of the middle section 312 of the fixed shaft 31 fixedly by means of press-fitting, riveting, welding or fasteners. The motor speed measuring circuit board 34 is fixed on the speed measuring shaft sleeve 43 by the screws 372, and a speed measuring element 371 is fixed on the speed measuring circuit board 37 and is connected to the speed measuring circuit board 37 with the lead 44. The motor rotor magnetic ring 36 and the speed measuring magnetic ring 38 are provided on the inner wall of the drum casing 35 of the winding roller respectively at a certain distance. When the fixed shaft 31 is inserted into the drum casing, a position of the motor stator coil 332 is corresponding to a position of the motor rotor magnetic ring 36, and a position of the speed measuring element 371 on the speed measuring circuit board 37 is corresponding to a position of the speed measuring magnetic ring 38. The two bearings 32 are mounted at the cut-out sections 312 of the fixed shaft 31, respectively, wherein the inner race of the bearing 32 is disposed to sleeve the cut-out section 312 of the fixed shaft, and the outer ring of the bearing 32 is fixed with the bearing seat 351 on the inner wall of the drum casing. The end cap 39 of the drum casing 35 is disposed to sleeve the cut-out section 312 of the fixed shaft 31, and the seal 60 is mounted between the shaft sleeve section 391 of the end cap and the cut-out section 312 of the fixed shaft to seal the end cap 39, wherein the lead 42 connected to the stator driving circuit board 34 passes through the gap 50 between the inner race of the bearing and the cut-out section 312 of the fixed shaft, then passes through the opening 61 of the seal 60 and runs out of the end cap 39 to extend out of the drum casing 35. The lead 44 connected to the speed measuring circuit board 37 passes through the gap 50 between the inner race of the bearing at the other end and the cut-out section 312 of the fixed shaft, then passes through the opening of the seal 60 and runs out of the end cap 39 at the other end to extend out of the drum casing 35.

During operation, the lead 42 connected to the driving circuit board 34 of the motor stator coil of the winding roller is connected to an external control circuit. After being energized, the motor stator coil 332 generates a magnetic field which interacts with a magnetic field of the motor rotor magnetic ring 36 on the inner wall of the drum casing 35 to drive the motor rotor 36 to rotate, thereby causing the drum casing 35 to rotate. The rotation of the drum casing 35 drives the yarn bobbin 2 in contact with the winding roller 3 to rotate, so as to wind the yarn onto the yarn bobbin, wherein the speed measuring element 371 mounted on the speed measuring circuit board 371 is a Hall element, which calculates a rotation speed of the winding roller motor by sensing a state change of the speed measuring component 38. The speed measuring circuit board 37 is connected to the external control circuit through the lead 44, and the external control circuit can adjust and control the speed of the winding roller according to a deviation between the rotation speed of the winding roller measured by the speed measuring unit and a set-speed.

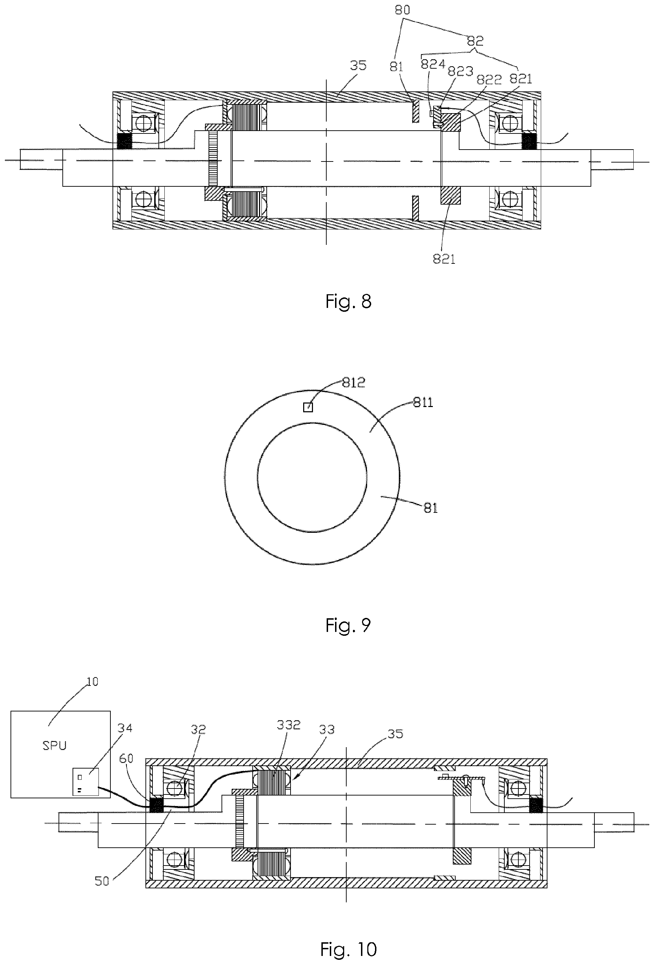

Please refer to Fig. 8, which illustrates a structural diagram of a second embodiment of the present invention. The difference between the second embodiment and the above first embodiment is that the structure of the speed measuring unit of the winding roller motor and the speed measuring method in this embodiment are different from those in the first embodiment. In this embodiment, a rotating part and a fixed part of the speed measuring unit are oppositely disposed along a longitudinal direction of the fixed shaft. Specifically, please refer to Figs. 8 and 9, in the second embodiment, the speed measuring unit 8 of the winding roller motor comprises a rotating part 81 fixed with the drum casing and a fixed part 82 fixed with the fixed shaft, wherein the rotating part 81 comprises a circular ring 811 extending perpendicularly to the inner wall of the drum casing 35, and a magnet 812 is provided on the circular ring 811. The fixed part 82 comprises a speed measuring shaft sleeve 821 disposed to sleeve the fixed shaft 31, a speed measuring circuit board 823 fixed on the speed measuring shaft sleeve 821 by screws 822, and a speed measuring element 824 disposed on the speed measuring circuit board 823, wherein the speed measuring circuit board 823 is fixed on the speed measuring shaft sleeve 821 in a direction perpendicular to an axis of the fixed shaft, so that the speed measuring element 824 on the speed measuring circuit board 823 is aligned with the speed measuring element 812 on the circular ring 811 along a longitudinal axis of the fixed shaft 31. In this embodiment, the speed measuring element 824 is a Hall element, and the speed measuring element 812 is a magnet. When the magnet 812 on the circular ring rotates along with the drum casing 35, a distance between the magnet 812 and the Hall element 824 changes periodically, and a magnetic field generated by the magnet 812 changes periodically. The rotation speed of the drum casing 35 can be calculated from a signal change due to a state change sensed by the Hall element 824.

In the second embodiment, the magnet 812 is fixed on the circular ring, and the Hall element is mounted on the speed measuring circuit board 823. In other embodiments, the circular ring and the speed measuring circuit board can also use a photoelectric speed measuring sensor. The photoelectric speed measuring sensor may be obtained by providing a photoelectric tube on the speed measuring circuit board 823, and providing a reflective sheet 812 on the circular ring 811. The light emitted by the photoelectric tube is reflected by the reflective sheet 812 and then received by a receiving device on the speed measuring circuit board 823 to generate a periodic pulse signal, from which the rotation speed of the drum casing 35 can be calculated. Alternatively, an opening is provided on the circular ring, and a photoelectric emitting element and a photoelectric receiving element are provided on two sides of the circular ring, respectively; when the opening of the circular ring passes by the photoelectric element, light from the photoelectric emitting element irradiates the photoelectric receiving element through the opening; and when a non-opening part of the circular ring passes by the photoelectric element, light from the photoelectric emitting element is blocked from irradiating the photoelectric receiving element, while the rotation speed of the drum casing can be calculated from a light receiving frequency of the photoelectric receiving element. Alternatively, in other embodiments, any other type of sensor, such as a vortex proximity switch sensor or a capacitive proximity switch sensor may also be used for speed measurement, which will not be illustrated here.

Please refer to Fig. 10, which illustrates a structural diagram of a third embodiment of the present invention, and the difference between the third embodiment and the first embodiment is that in the third embodiment, a driving circuit board of the motor stator 33 is not provided inside the drum casing 35 of the winding roller motor. The driving circuit board 34 of the motor stator 33 is provided outside the drum casing 35 of the winding roller motor. The lead 42 is connected to an external driving circuit board 34 through the gap 50 between the bearing 32 and the cutout section 312 of the fixed shaft and the opening 61 of the seal 60 when it is connected to the stator coil 332, wherein the driving circuit board 34 of the motor stator coil 332 may also be integrated onto the control circuit board 10 of the whole machine.

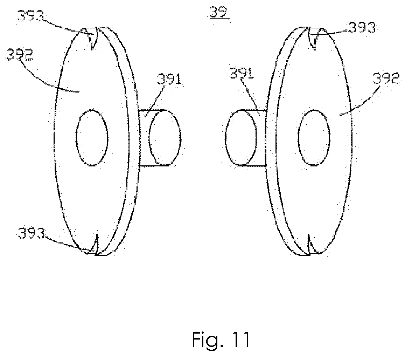

Please refer to Fig. 11, which illustrates a structural diagram of an end cap of a winding roller motor according to a fourth embodiment of the present invention. The difference between the fourth embodiment and the first embodiment as shown in Figure 5 in conjunction with Figure 2 is that in the fourth embodiment, the edge of the end cap 39 of the drum casing 35 of the winding roller motor is provided with a fan-blade shaped opening 393, i.e., an opening spirally and gradually changing inwards. The end cap 39 of the present invention is fixed together with the fixed shaft 31 and does not rotate. When the drum casing 35 rotates normally, the fan-blade shaped opening 393 rotates in a direction relative to the drum casing 35 so as to blow air out of the drum casing 35, so that on the one hand, heat generated in the winding roller motor can be discharged out of the drum casing 35, and on the other hand, hairy fibers entering the drum casing 35 through gaps can be removed from the interior of the drum casing 35. In the illustrated embodiment, only two opposing fan-blade shaped openings 393 are provided on each end cap 39, and in other embodiments, a plurality of fan-blade shaped openings may be provided along the edge of the end cap.

The foregoing embodiments are merely exemplary descriptions made by the inventor to introduce the inventive points of the present invention. The structures of the above embodiments can also be combined with each other.
race of either of the bearings 32 is equivalent to the diameter of the fixed shaft 31, and it is unnecessary to reserve a gap between the inner race of the bearing 32 and the fixed shaft for the lead to pass through. The lead 42 connected to the driving circuit board 34 of the motor stator and the lead 44 connected to the speed measuring circuit board 823 just need to pass through the end cap 39 at one end of the drum casing 35 only, thus the overall structure is simpler.

Please refer to Fig. 13, which illustrates a structural diagram of a sixth embodiment of the present invention. The difference between this sixth embodiment and the fifth embodiment is that the speed measuring circuit board 823 is not fixed on the fixed shaft 31 through the speed measuring shaft sleeve. Instead, the speed measuring shaft sleeve is cancelled, and the speed measuring circuit board 823 is directly fixed on the fixed shaft 31.

Please refer to Fig. 14, which illustrates a structural diagram of a seventh embodiment of the present invention. In this embodiment, the stator 33 and the rotor 36 of the motor are located between the bearing 32 and the end cap 39 located on the outermost side along the longitudinal direction of the fixed shaft 31. The portion of the fixed shaft 31 inside the drum casing 35 is a complete cylinder, wherein the end cap 39 close to the motor is provided with an opening 393, and the lead 42 connected to the driving circuit board 34 of the motor stator and the lead 44 connected to the motor speed measuring circuit board 823 extend out of the drum casing through the opening 393 in the end cap 39.

The foregoing embodiments are merely exemplary descriptions made by the inventor to introduce the inventive points of the present invention. The structures of the above embodiments can also be combined with each other. For example, the fifth embodiment can be carried out in conjunction with the fourth embodiment in which the end cap is provided with fan-blade shaped opening. Alternatively, the solution of the sixth embodiment that the speed measuring circuit board is directly fixed on the fixed shaft can be combined with the solution of the second embodiment that the motor stator and the speed measuring unit are located between two bearings, and so on. In the foregoing embodiments, two bearings are provided at two ends of the drum casing, while in other embodiments, three or more bearings may be also provided inside the drum casing.

Those described above are just descriptions of some embodiments of the technical solutions of the present invention, and the inventor cannot illustrate all the embodiments one by one. The scope of the claims of the present invention is not limited to the aforementioned embodiments only, and any modification that can be made by those skilled in the art based on the embodiments of the present specification without paying a creative labor should fall within the scope of the claims of the present invention.

## Claims

1. A winding roller motor (3) for driving a bobbin to rotate, which is comprised of a spinning station of a textile machine, wherein the winding roller motor (3) comprises
a fixed shaft (31),
two bearings (32) mounted on the fixed shaft and disposed to sleeve both ends of the fixed shaft (31),
a drum casing (35),
end caps (39) at both ends of the drum casing (35),
a motor stator (33) fixed on the fixed shaft (31) by means of a stator shaft sleeve (41),
a driving magnetic ring (36) disposed on an inner wall of the drum casing (35) at a position corresponding to the motor stator (33),
wherein
the drum casing (35) is disposed to sleeve the bearings (32), wherein the end caps (39) are disposed on the fixed shaft (31) at the outer side of the two bearings (32) to close the drum casing (35), and
the winding roller motor (3) comprises a speed measuring unit having
- a speed measuring circuit board (37) with a speed measuring circuit element (371), wherein the speed measuring circuit board (37) is adapted to be connected to a control unit outside the winding roller motor (3) via a lead (44) and wherein the speed measuring circuit board (37) being fixed on the fixed shaft (31) or on an outer surface of a speed measuring shaft sleeve (43) being press-fitted and fixed on the fixed shaft (31), and
- a speed measuring magnetic ring (38) being provided on the inner wall of the drum casing (35) at a position corresponding to the speed measuring circuit element (371) on the speed measuring circuit board (37),
wherein the driving magnetic ring (36) and the speed measuring magnetic ring (38) are provided on the inner wall of the drum casing (35) at such a certain distance with respect to each other that the speed measuring effect of the speed measuring unit is prevented from being influenced by heat generated by the motor stator.

2. The winding roller motor (3) of the textile machine according to claim 1, **characterized in that** the motor stator (33) comprises magnetic steel and a coil wound on the magnetic steel, and the motor stator (33) is fixed, by means of press-fitting, riveting, welding or fasteners, on the stator shaft sleeve (41) disposed to sleeve the fixed shaft (31).

3. The winding roller motor (3) of the textile machine according to claim 2, **characterized in that** the motor stator (33) comprises magnetic steel and a coil wound on the magnetic steel, and the motor stator (33) is fixed on the stator shaft sleeve (41) disposed to sleeve the fixed shaft (31) by means of screws (333) penetrating the magnetic steel.

4. The winding roller motor (3) of the textile machine according to claim 1, **characterized in that** the stator shaft sleeve (41) is fixed on the fixed shaft (31) by means of press-fitting, riveting, welding or fasteners.

5. The winding roller motor (3) of the textile machine according to claim 4, **characterized in that** knurling (314) is provided on the fixed shaft (31) at a position in press-fitting with the stator shaft sleeve (41).

6. The winding roller motor (3) of the textile machine according to claim 1, **characterized in that** the fixed shaft (31) comprises a cylindrical middle section (311) in a middle thereof, cut-out sections (312) extending from two ends of the middle section (311) and formed by cutting off a part of cylinder, and fixed sections (313) extending from the cut-out sections (312), the motor stator (33) being fixed at the middle section (311) of the fixed shaft (31).

7. The winding roller motor (3) of the textile machine according to claim 1, **characterized in that** the winding roller motor (3) further comprises a motor stator driving circuit board (34) fixed on the fixed shaft (31) and electrically connected to the motor stator (33).

8. The winding roller motor (3) of the textile machine according to claim 7, **characterized in that** the motor stator driving circuit board (34) is an annular circuit board fixed on the stator shaft sleeve (41).

9. A textile machine, comprising a plurality of spinning stations arranged side by side, each station comprising a bobbin for winding yarns and a winding roller for driving the bobbin to rotate, **characterized in that** the bobbin at each spinning station is separately driven by an independent winding roller motor (3) according to any one of claims 1 to 8.

## Patentansprüche

1. Spulwalzenmotor (3) zum drehenden Antreiben einer Spule, die Teil einer Spinnstelle einer Textilmaschine ist, wobei der Spulwalzenmotor (3) umfasst:
eine feststehende Welle (31),
zwei Lager (32), die an der feststehenden Welle angebracht und so angeordnet sind, dass sie beide Enden der feststehenden Welle (31) umschließen,
ein Trommelgehäuse (35),
Endkappen (39) an beiden Enden des Trommelgehäuses (35),
einen Motorstator (33), der anhand einer Statorwellen-Mantelhülse (41) an der feststehenden Welle (31) angebracht ist,
einen Antriebsmagnetring (36), der an einer Innenwand des Trommelgehäuses (35) an einer Position angeordnet ist, die dem Motorstator (33) entspricht,
wobei das Trommelgehäuse (35) so angeordnet ist, dass es die Lager (32) umschließt, wobei die Endkappen (39) an der feststehenden Welle (31) an der Außenseite der zwei Lager (32) angeordnet sind, um das Trommelgehäuse (35) abzuschließen, und
wobei der Spulwalzenmotor (3) einen Drehzahlmesser umfasst mit
- einer Drehzahlmessplatine (37) mit einem Drehzahlmess-Schaltungselement (371), wobei die Drehzahlmessplatine (37) dafür ausgelegt ist, über einen Anschlussdraht (44) mit einer Steuereinheit außerhalb des Spulwalzenmotors (3) verbunden zu werden, und wobei die Drehzahlmessplatine (37) an der feststehenden Welle (31) oder an einer Außenfläche einer Drehzahlmesswellen-Mantelhülse (43) befestigt ist, die auf die feststehende Welle (31) aufgepresst und an ihr befestigt ist, und
- einem Drehzahlmess-Magnetring (38), der an der Innenwand des Trommelgehäuses (35) an einer Position angeordnet ist, die dem Drehzahlmess-Schaltungselement (371) auf der Drehzahlmessplatine (37) entspricht,
wobei der Antriebsmagnetring (36) und der Drehzahlmess-Magnetring (38) an der Innenwand des Trommelgehäuses (35) in einem solchen bestimmten Abstand zueinander vorgesehen sind, dass verhindert wird, dass die Drehzahlmesswirkung des Drehzahlmessers durch Wärme beeinflusst wird, die durch den Motorstator erzeugt wird.

2. Spulwalzenmotor (3) der Textilmaschine nach Anspruch 1, **dadurch gekennzeichnet, dass** der Motorstator (33) magnetischen Stahl und eine um den magnetischen Stahl gewickelte Wicklung umfasst, und dass der Motorstator (33) durch Aufpressen, Nieten, Schweißen oder mit Befestigungselementen an der Statorwellen-Mantelhülse (41) befestigt ist, die so angeordnet ist, dass sie die feststehende Welle (31) umschließt.

3. Spulwalzenmotor (3) der Textilmaschine nach Anspruch 2, **gekennzeichnet dadurch, dass** der Motorstator (33) magnetischen Stahl und eine um den magnetischen Stahl gewickelte Wicklung umfasst, und dass der Motorstator (33) an der Statorwellen-Mantelhülse (41), die so angeordnet ist, dass sie die feststehende Welle (31) umschließt, mithilfe von Schrauben (333) befestigt ist, die den magnetischen Stahl durchdringen.

4. Spulwalzenmotor (3) der Textilmaschine nach Anspruch 1, **dadurch gekennzeichnet, dass** die Statorwellen-Mantelhülse (41) durch Aufpressen, Nieten, Schweißen oder mit Befestigungselementen an der feststehenden Welle (31) angebracht ist.

5. Spulwalzenmotor (3) der Textilmaschine nach Anspruch 4, **dadurch gekennzeichnet, dass** eine Rändelung (314) an der feststehenden Welle (31) an einer Position in Presspassung mit der Statorwellen-Mantelhülse (41) vorgesehen ist.

6. Spulwalzenmotor (3) der Textilmaschine nach Anspruch 1, **dadurch gekennzeichnet, dass** die feststehende Welle (31) einen zylindrischen mittleren Abschnitt (311) in ihrer Mitte, ausgeschnittene Abschnitte (312), die sich von zwei Enden des mittleren Abschnitts (311) aus erstrecken und durch Abschneiden eines Teils des Zylinders gebildet werden, und feste Abschnitte (313), die sich von den ausgeschnittenen Abschnitten (312) aus erstrecken, umfasst, wobei der Motorstator (33) am mittleren Abschnitt (311) der feststehenden Welle (31) angebracht ist.

7. Spulwalzenmotor (3) der Textilmaschine nach Anspruch 1, **dadurch gekennzeichnet, dass** der Spulwalzenmotor (3) weiter eine Motorstator-Steuerplatine (34) umfasst, die an der feststehenden Welle (31) angebracht und elektrisch mit dem Motorstator (33) verbunden ist.

8. Spulwalzenmotor (3) der Textilmaschine nach Anspruch 7, **dadurch gekennzeichnet, dass** die Motorstator-Steuerplatine (34) eine ringförmige Platine ist, die an der Statorwellen-Mantelhülse (41) angebracht ist.

9. Textilmaschine mit einer Vielzahl von nebeneinander angeordneten Spinnstellen, wobei jede Stelle eine Spule zum Spulen von Garnen und eine Spulwalze zum drehenden Antreiben der Spule umfasst, **dadurch gekennzeichnet, dass** die Spule an jeder Spinnstelle separat von einem unabhängigen Spulwalzenmotor (3) nach einem der Ansprüche 1 bis 8 angetrieben wird.

## Revendications

1. Un moteur de rouleau de renvidage (3) pour entraîner la rotation d'une bobine comprenant le poste de filage d'une machine textile, où le moteur de rouleau de renvidage (3) comprend un arbre fixe (31),
deux roulements (32) montés sur l'arbre fixe et disposés de manière à manchonner les deux extrémités de l'arbre fixe (31),
une enveloppe de tambour (35),
des capuchons d'extrémité (39) aux deux extrémités de l'enveloppe de tambour (35),
un stator de moteur (33) monté sur l'arbre fixe (31) à l'aide d'un manchon d'arbre de stator (41),
un anneau magnétique d'entraînement (36) disposé sur une paroi intérieure de l'enveloppe de tambour (35), à une position correspondant au stator de moteur (33),
où l'enveloppe de tambour (35) est disposée de manière à manchonner les roulements (32), où les capuchons d'extrémité (39) sont disposés sur l'arbre fixe (31) du côté extérieur des deux roulements (32) pour fermer l'enveloppe de tambour (35), et
le moteur de rouleau de renvidage (3) comprend une unité de mesure de la vitesse de rotation possédant
- une carte de circuit de mesure de la vitesse de rotation (37) composée d'un élément de circuit de mesure de la vitesse de rotation (371), où la carte de circuit de mesure de la vitesse de rotation (37) est adaptée pour être raccordée à une unité de commande à l'extérieur du moteur de rouleau de renvidage (3) via un fil (44) et où la carte de circuit de mesure de la vitesse (37) est montée sur l'arbre fixe (31) ou sur la surface extérieure d'un manchon d'arbre de mesure de la vitesse de rotation (43) emmanché et monté sur l'arbre fixe (31), et
- un anneau magnétique de mesure de la vitesse de rotation (38) situé sur la paroi intérieure de l'enveloppe de tambour (35), à une position correspondant à l'élément de circuit de mesure de la vitesse de rotation (371) sur la carte de circuit de mesure de la vitesse de rotation (37),
où l'anneau magnétique d'entraînement (36) et l'anneau magnétique de mesure de la vitesse de rotation (38) sont situés sur la paroi intérieure de l'enveloppe de tambour (35), à une certaine distance l'un de l'autre de sorte que l'effet de mesure de la vitesse de rotation de l'unité de mesure de la vitesse de rotation ne peut pas être influencé par la chaleur générée par le stator de moteur.

2. Le moteur de rouleau de renvidage (3) de la machine textile selon la revendication 1, **caractérisé en ce que** le stator de moteur (33) comprend de l'acier magnétique et une bobine enroulée sur l'acier magnétique, et le stator de moteur (33) est fixé par emmanchement, rivetage, soudure ou à l'aide d'attaches sur le manchon d'arbre de stator (41) disposé de manière à manchonner l'arbre fixe (31).

3. Le moteur de rouleau de renvidage (3) de la machine textile selon la revendication 2, **caractérisé en ce que** le stator de moteur (33) comprend de l'acier magnétique et une bobine enroulée sur l'acier magnétique, et le stator de moteur (33) est fixé sur le manchon d'arbre de stator (41) disposé de manière à manchonner l'arbre fixe (31) au moyen de vis (333) pénétrant dans l'acier magnétique.

4. Le moteur de rouleau de renvidage (3) de la machine textile selon la revendication 1, **caractérisé en ce que** le manchon d'arbre de stator (41) est monté sur l'arbre fixe (31) par emmanchement, rivetage, soudure ou à l'aide d'attaches.

5. Le moteur de rouleau de renvidage (3) de la machine textile selon la revendication 4, **caractérisé en ce qu'**un moletage (314) est prévu sur l'arbre fixe (31) à une position lors de l'emmanchement avec le manchon d'arbre de stator (41).

6. Le moteur de rouleau de renvidage (3) de la machine textile selon la revendication 1, **caractérisé en ce que** l'arbre fixe (31) comprend une section centrale cylindrique (311) en son milieu, des sections découpées (312) s'étendant à partir des deux extrémités de la section centrale (311) et formées par le découpage d'une partie du cylindre, et des sections fixes (313) s'étendant à partir des sections découpées (312), le stator de moteur (33) étant monté sur la section centrale (311) de l'arbre fixe (31).

7. Le moteur de rouleau de renvidage (3) de la machine textile selon la revendication 1, **caractérisé en ce que** le moteur de rouleau de renvidage (3) comprend en outre une carte de circuit d'entraînement du stator de moteur (34) montée sur l'arbre fixe (31) et raccordée électriquement au stator de moteur (33).

8. Le moteur de rouleau de renvidage (3) de la machine textile selon la revendication 7, **caractérisé en ce que** la carte de circuit d'entraînement du stator de moteur (34) est une carte de circuit annulaire fixée sur le manchon d'arbre de stator (41).

9. Une machine textile comprenant plusieurs postes de filage disposés côte à côte, chaque poste comprenant un bobine pour enrouler les fils et un rouleau de renvidage pour entraîner la rotation de la bobine, **caractérisée en ce que** la bobine sur chaque poste de filage est entraînée séparément par un moteur de rouleau de renvidage (3) indépendant selon l'une des revendications 1 à 8.
